# EUROPÄISCHE PATENTSCHRIFT

(11) **EP 0 793 456 B1**
(45) Veröffentlichungstag und Bekanntmachung des Hinweises auf die Patenterteilung: **09.12.1998**
(21) Anmeldenummer: 95930455.1
(22) Anmeldetag: 16.08.1995
(51) Int. Cl.: A61C 17/34, A61C 17/26

(54) **BÜRSTENTEIL FÜR EINE ELEKTRISCHE ZAHNBÜRSTE**
BRUSH COMPONENT FOR AN ELECTRIC TOOTHBRUSH
PARTIE DE BROSSE POUR BROSSE A DENTS ELECTRIQUE

(30) Priorität: 23.09.1994 DE 4433914
(43) Veröffentlichungstag der Anmeldung: 10.09.1997
(73) Patentinhaber: Braun Aktiengesellschaft, Frankfurt am Main (DE)
(72) Erfinder: HERZOG, Karl, D-60489 Frankfurt am Main (DE)
(74) Vertreter: Vorbeck, Wolfgang Ernst August, Dr.
(86) Internationale Anmeldenummer: EP9503223
(87) Internationale Veröffentlichungsnummer: WO9609018

(56) Entgegenhaltungen:
- WO-A-94/12121
- DE-A- 3 931 982
- DE-U- 9 304 184

## Beschreibung

Die Erfindung betrifft ganz allgemein elektrische Zahnbürsten und insbesondere ein Bürstenteil für eine elektrische Zahnbürste nach den Merkmalen des Oberbegriffs des Patentanspruchs 1.

Ein derartiges Bürstenteil ist aus der deutschen Offenlegungsschrift DE 39 37 850 A1 bekannt. Dort ist eine elektrische Zahnbürste beschrieben, die ein Griffteil aufweist, aus dem eine Antriebswelle herausragt. In dem Griffteil sind elektrische Antriebsmittel untergebracht, mit deren Hilfe die Antriebswelle in eine oszillierende Drehbewegung um ihre Längsachse versetzt werden kann. Auf das Griffteil und die Antriebswelle kann ein in Richtung der Längsachse sich erstreckendes Bürstenteil aufgesteckt werden, das ein Trägerrohr aufweist, an dessen Ende ein Borstenträger angeordnet ist. In dem Trägerrohr ist eine Welle untergebracht, die im aufgesteckten Zustand mit der Antriebswelle gekoppelt ist. Von dem Borstenträger stehen Borsten ab, die etwa quer zur Längsachse des Bürstenteils angeordnet sind. Mit Hilfe eines Kegelradgetriebes wird die von der Antriebswelle auf die Welle des Bürstenteils übertragene oszillierende Drehbewegung um etwa 90 Grad umgelenkt. Dies hat zur Folge, daß der Borstenträger im eingeschalteten Zustand der elektrischen Zahnbürste eine oszillierende Drehbewegung um eine etwa quer zur Längsachse des Bürstenteils und damit etwa parallel zu den Borsten angeordnete Achse ausführt. Die von den freien Enden der Borsten gebildete Reinigungsfläche führt somit eine oszillierende Drehbewegung auf den Zahnflächen eines Benutzers aus. Mit dieser oszillierenden Drehbewegung kann eine gute Reinigung der Zahnflächen erreicht werden.

Aufgabe der Erfindung ist es, ein Bürstenteil für eine elektrische Zahnbürste zu schaffen, mit dem eine verbesserte Zahnreinigung, insbesondere im Hinblick auf die Reinigung von Interdentalflächen, erreichbar ist.

Entsprechend der Erfindung wird diese Aufgabe bei einem Bürstenteil der eingangs genannten Art durch die Merkmale des kennzeichnenden Teils des Patentanspruchs 1 gelöst.

Die zusätzliche Schwenkbewegung des Borstenträgers um die Längsachse hat zur Folge, daß die von den freien Enden der Borsten gebildete Reinigungsfläche zusätzlich zu der oszillierenden Drehbewegung eine oszillierende Schwenkbewegung ausführt. Die Drehbewegung bewirkt, wie bisher, eine gute Reinigung der Zahnflächen eines Benutzers. Mit Hilfe dieser Schwenkbewegung der Reingungsfläche ist aufgrund der zusätzlichen Bewegungskomponente eine bessere Reinigung der Zähne möglich. Insbesondere bei der üblichen Ausrichtung des Bürstenteils durch den Benutzer, nämlich dem Aufsetzen der Reinigungsfläche des Bürstenteils auf die bukkalen bzw. lingualen Zahnflächen, verläuft die Schwenkbewegung etwa parallel zu den Interdentalflächen, so daß eine wesentlich verbesserte Reinigung der Interdentalflächen des Benutzers erreichbar ist. Die verbesserte Reinigung der Zähne und insbesondere der Interdentalflächen wird somit ohne zusätzliche Maßnahmen des Benutzers, also automatisch bewirkt, was der Anwendung durch, und dem Komfort für den Benutzer entgegenkommt. Diese zusätzliche Schwenkbewegung um die Längsachse könnte ebenfalls als oszillierende Schenkbewegung bezeichnet werden, wobei ein Mitnehmerstift einen Festpunkt für den Borstenträger bildet. Dabei führt der Lagerstift aufgrund seiner festen Verbindung mit der Welle eine Schwenkbewegung um die Längsachse aus. Da des weiteren der Borstenträger auf dem Lagerstift angeordnet ist, führt auch der Borstenträger diese Schwenkbewegung aus. Auf diese Weise steht eine einfache und insbesondere kostengünstige Möglichkeit zur Verfügung, um die zusätzliche Schwenkbewegung des Borstenträgers um die Längsachse zu erreichen. Zweckmäßig ist es, wenn der Lagerstift in eine Bohrung der Welle eingepreßt ist. Dadurch wird die Herstellung des Bürstenteils weiter vereinfacht.

Durch die Kopplung des Borstenträgers und des Trägerrohrs ist der Borstenträger an einer freien Drehbewegung um den Lagerstift gehindert. Statt dessen bewirkt die Kopplung, daß die oszillierende Schwenkbewegung des Borstenträgers umgesetzt wird und zu der gleichzeitigen oszillierenden Drehbewegung des Borstenträgers führt. Durch diese Kopplung des Borstenträgers und des Trägerrohrs wird somit in einfacher Weise die bisherige Drehbewegung der Reinigungsfläche erreicht.

Bei einer vorteilhaften Weiterbildung der Erfindung nach dem Patentanspruch 3 ist der Borstenträger mit Hilfe eines Sacklochs auf dem Lagerstift drehbar gelagert. Damit in diesem Fall der Borstenträger nicht von dem Lagerstift herunterfällt, ist der Borstenträger mit der Welle gekoppelt. Eine besonders zweckmäßige Möglichkeit der Kopplung ist im Patentanspruch 4 angegeben, wonach die in die brückenförmige Öffnung hineinragende Welle ein Herausfallen des Borstenträgers verhindert. Es versteht sich, daß der Borstenträger auch anderweitig auf dem Lagerstift gehalten sein kann, wie beispielsweise mit Hilfe von Sicherungssplints oder dergleichen. Die beanspruchten Ausgestaltungen stellen jedoch insbesondere im Hinblick auf die Herstellung des Bürstenteils besonders einfache und kostengünstige Möglichkeiten der Lagerung des Borstenträgers auf dem Lagerstift dar.

Bei der Erfindung wird die vorgenannte Kopplung durch das Hineinragen eines vom Trägerrohr abstehenden Mitnehmerstifts in eine Öffnung des Borstenträgers erreicht. Es versteht sich, daß die Kopplung auch auf andere Art und Weise vorgenommen werden kann, wie beispielsweise durch ineinandergreifende Zähne oder dergleichen. Die beanspruchte Weiterbildung stellt jedoch eine sehr einfache und kostengünstige Möglichkeit dar, die gewünschte Kopplung zu realisieren. Zweckmäßig ist es dabei, wenn der Mitnehmerstift in eine Bohrung des Trägerrohrs eingepreßt ist. Dadurch wird insbesondere die Herstellung des Bürstenteils weiter vereinfacht. Des weiteren ist es besonders vorteilhaft, die Öffnung in dem Borstenträger entsprechend den Merkmalen des Patentanspruchs 6 auszugestalten. Durch die Form der Öffnung und/oder die Wahl eines verschleißfesten Werkstoffes wird eine Verschleißminderung und damit eine längere Haltbarkeit des Bürstenteils erreicht.

In den Patentansprüchen 2, 5 und 7 sind Möglichkeiten aufgezeigt, wie der Lagerstift und der Mitnehmerstift zueinander angeordnet sein können, um eine zusätzliche Taumelbewegung des Borstenträgers und damit der Reinigungsfläche zu erreichen. Die angegebenen Winkelbereiche haben sich dabei in der Praxis als besonders vorteilhaft herausgestellt.

Aus dem Patentanspruch 8 geht hervor, daß die Erfindung nicht nur in der Form des Bürstenteils als solchem verwirklicht sein kann, sondern auch in der Form einer elektrischen Zahnbürste, auf die ein entsprechendes Bürstenteil beispielsweise aufgesteckt ist.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind.

Es zeigt:
- Fig. 1: eine schematische Darstellung eines Längsschnitts durch ein erstes Ausführungsbeispiel eines Bürstenteils für eine elektrische Zahnbürste,
- Fig. 2: eine schematische Darstellung eines Querschnitts durch den Borstenträger des Bürstenteils der Fig. 1 entlang der Ebene A - A der Fig. 1,
- Fig. 3: eine schematische Darstellung eines partiellen Längsschnitts durch den Borstenträger des Bürstenteils der Fig. 1 entlang der Ebene B - B der Fig. 2, sowie
- Fig. 4: eine schematische Darstellung eines Längsschnitts durch ein zweites Ausführungsbeispiel eines Bürstenteils für eine elektrische Zahnbürste.

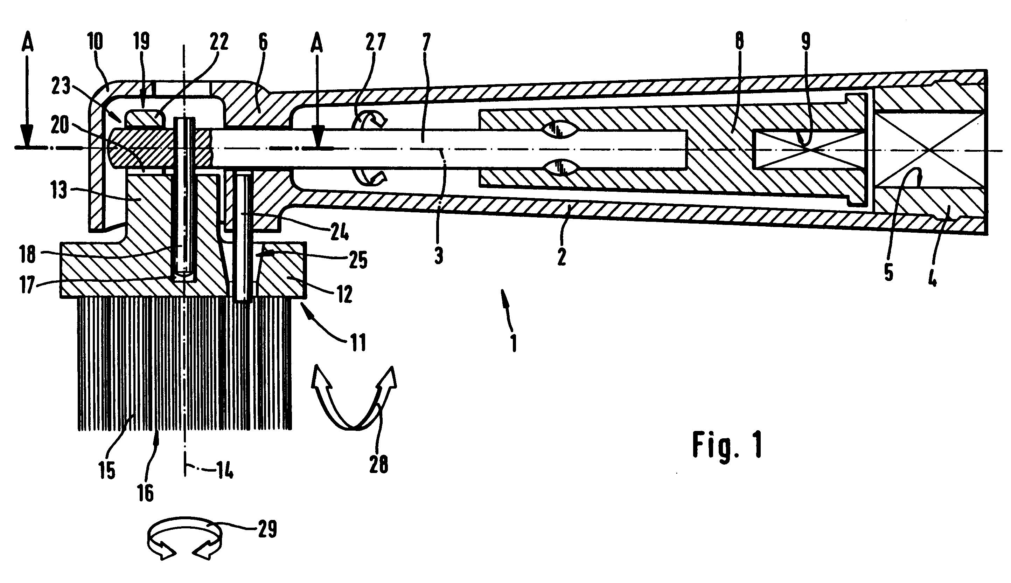

Die anhand der Fign. 1 bis 4 nachfolgend beschriebenen Bürstenteile sind geeignet zum Betrieb mit einer elektrischen Zahnbürste, wie sie in der deutschen Offenlegungsschrift DE 39 37 850 A1 beschrieben ist. Diese elektrische Zahnbürste weist ein Griffteil auf, aus dem eine Antriebswelle herausragt. In dem Griffteil sind elektrische Antriebsmittel untergebracht, die die Antriebswelle im eingeschalteten Zustand in eine oszillierende Drehbewegung um ihre Längsachse versetzen. Der dabei überstrichene Drehwinkelbereich beträgt etwa +/- 35 Grad. Die Antriebswelle und dasjenige Ende des Griffteils, aus dem die Antriebswelle herausragt, sind mit Außenkonturen zum Aufstecken eines Bürstenteils und zum Übertragen der erzeugten Drehbewegung versehen.

In den Fign. 1 bis 3 ist ein Bürstenteil 1 dargestellt, das auf das Griffteil und die Antriebswelle der obigen elektrischen Zahnbürste aufgesteckt werden kann. Das Bürstenteil 1 weist ein Trägerrohr 2 auf, das sich in Richtung einer Längsachse 3 erstreckt. Das Trägerrohr 2 ist an seinem dem Griffteil zugewandten freien Ende mit einem Profilring 4 versehen, der eine Innenkontur 5 besitzt, die zu der Außenkontur des Griffteils komplementär ist. Auf diese Weise kann das Bürstenteil 1 drehfest auf das Griffteil aufgesteckt werden.

An seinem dem Griffteil abgewandten Ende ist das Trägerrohr 2 mit einem Lager 6 versehen, in dem eine Welle 7 drehbar gelagert ist. Die Welle 7 ist in der Längsachse 3 des Trägerrohrs 2 angeordnet und besteht vorzugsweise aus Metall. Die Welle 7 erstreckt sich ausgehend vom Lager 6 in der dem Griffteil zugewandten Richtung etwa bis zur Mitte des Trägerrohrs 2 und steht in der dem Griffteil abgewandten Richtung ein Stück über das Lager 6 und damit über das Trägerrohr 2 über. In der dem Griffteil zugewandten Richtung ist die Welle 7 mit einer weiteren Welle 8 fest verbunden, die in der Längsachse 3 angeordnet ist und vorzugsweise aus Kunststoff besteht. Die weitere Welle 8 besitzt an ihrem dem Griffteil zugewandten freien Ende eine Innenkontur 9, die zu der Außenkontur der aus dem Griffteil herausragenden Antriebswelle komplementär ist. Auf diese Weise kann die Antriebswelle drehfest mit der weiteren Welle 8 und damit auch mit der Welle 7 verbunden werden.

Bei den Innen- und Außenkonturen 5, 9 kann es sich - im Querschnitt gesehen - um quadratische, sternförmige oder ähnliche Konturen handeln, die derart aneinander angepaßt sind, daß einerseits ein einfaches Aufstecken und Abziehen des Bürstenteils 1 vom Griffteil durch einen Benutzer möglich ist, daß aber andererseits auch der sichere Sitz des Bürstenteils 1 auf dem Griffteil gewährleistet ist.

An seinem dem Griffteil abgewandten Ende ist an das Trägerrohr 2 eine Schale 10 angebracht, die etwa denjenigen Bereich abdeckt, den die Welle 7 über das Lager 6 und damit über das Trägerrohr 2 übersteht. In diesem Bereich sind des weiteren ein Borstenträger 11 sowie Mittel zur Kopplung des Borstenträgers 11 mit der Welle 7 und dem Trägerrohr 2 angeordnet.

Der Borstenträger 11 weist eine scheibenförmige Platte 12 sowie eine Nabe 13 auf und ist im wesentlichen rotationssymmetrisch zu einer Querachse 14 ausgestaltet, die in einem Winkel von etwa 90 Grad zur Längsachse 3 angeordnet ist. Auf ihrer der Welle 7 abgewandten Seite ist die Platte 12 mit einer Vielzahl von Borsten 15 versehen, die in einer zur Querachse 14 etwa parallelen Richtung von der Platte 12 abstehen. Die Borsten 15 sind alle etwa gleich lang, so daß deren freie Enden eine etwa kreisförmige Reinigungsfläche 16 bilden, die etwa parallel zur Längsachse 3 ausgerichtet ist. Ohne Beschränkung der Erfindung, können jedoch auch völlig anders aussehende Reinigungsflächen 16 vorgesehen werden, die aufgrund unterschiedlicher Längen der Borsten 15 z. B. pofiliert und/oder geneigt bzgl. der Längsachse 3 ausgerichtet sind. Auf der der Welle 7 zugewandten Seite der Platte 12 ist die Nabe 13 angeordnet, die ein Sackloch 17 aufweist. Dieses ist konzentrisch zur Querachse 14 ausgerichtet und zielt etwa in den Mittelpunkt der Reinigungsfläche 16.

In den in den Bereich der Schale 10 überstehenden Teil der Welle 7 ist konzentrisch zur Querachse 14 ein Lagerstift 18 in eine entsprechende Bohrung der Welle 7 eingepreßt. Hinsichtlich Länge und Durchmesser sind der Lagerstift 18 und das Sackloch 17 derart aneinander angepaßt, daß sie zusammen ein Lager für den Borstenträger 11 bilden. Der Borstenträger 11 ist somit drehbar um den Lagerstift 18 und damit um die Querachse 14 gelagert.

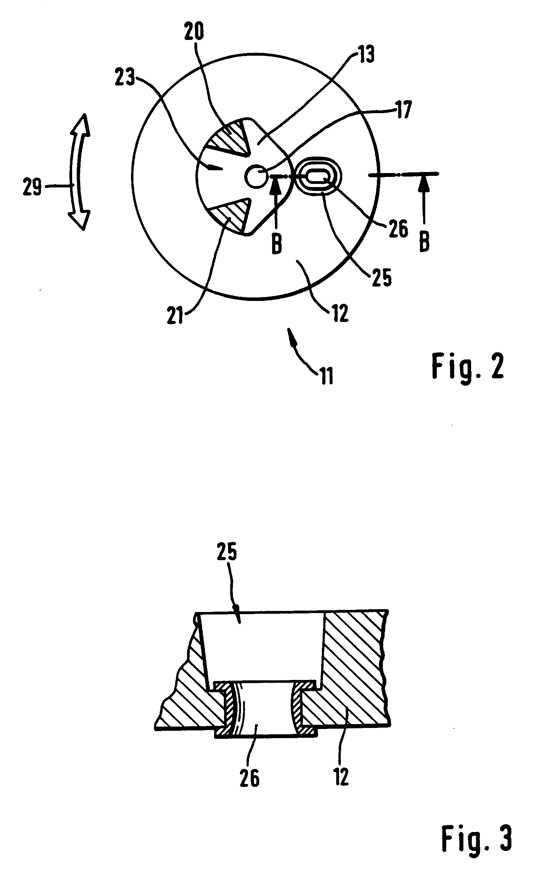

Im Bereich der Schale 10 und dort im Bereich des freien Endes der Welle 7 ist der Borstenträger 11 mit einer Brücke 19 versehen, die aus zwei Pfeilern 20, 21 und einem Holm 22 zusammengesetzt ist. Diese Bauteile bilden eine Öffnung 23, die etwa in Richtung der Längsachse 3 ausgerichtet ist und deren Querschnitt etwas größer ist als der Querschnitt der Welle 7. Durch die Öffnung 23 ist das freie Ende der Welle 7 hindurchgesteckt, ohne die Brücke 19 und damit den Borstenträger 11 zu berühren. Dadurch kann der Borstenträger 11 nicht auf dem Lagerstift 18 verrutschen oder gar herausfallen. Die Öffnung 23 und die Pfeiler 20, 21 sind insbesondere aus der Fig. 2 ersichtlich.

Im Bereich des Lagers 6 ist auf der der Platte 12 des Borstenträgers 11 zugewandten Seite des Trägerrohrs 2 ein Mitnehmerstift 24 in eine entsprechende Bohrung des Trägerrohrs 2 eingepreßt. Der Mitnehmerstift 24 ist nur so tief in das Trägerrohr 2 eingeführt, daß kein Kontakt mit der Welle 7 besteht. Des weiteren ist der Mitnehmerstift 24 etwa parallel zur Querachse 14 ausgerichtet.

In der Platte 12 des Borstenträgers 11 ist eine Öffnung 25 vorhanden, in die der Mitnehmerstift 24 hineinragt. Die Öffnung 25 ist etwa parallel zur Querachse 14 ausgerichtet und weist im Querschnitt etwa die Form eines Langlochs auf. Die Öffnung 25 kann mit einer Buchse 26 ausgekleidet sein, die aus einem verschleißfesten Werkstoff besteht, beispielsweise aus Metall, Keramik, Gummi oder dergleichen. Die Öffnung 25 und die Buchse 26 sind insbesondere aus den Fign. 2 und 3 ersichtlich.

Im eingeschalteten Zustand der elektrischen Zahnbürste wird die Welle 7 des auf das Griffteil aufgesteckten Bürstenteils 1 von der aus dem Griffteil herausragenden Antriebswelle in eine oszillierende Drehbewegung 27 um die Längsachse 3 versetzt. Daraus ergibt sich, daß der Lagerstift 18 eine oszillierende Schwenkbewegung ebenfalls um die Längsachse 3 ausführt. Die Lagerung des Borstenträgers 11 auf dem Lagerstift 18 hat nunmehr zur Folge, daß der Borstenträger 11 und damit auch die Reinigungsfläche 16 in eine oszillierende Schwenkbewegung 28 um die Längsachse 3 versetzt wird. Die oszillierende Schwenkbewegung 28 ist im wesentlichen identisch mit der oszillierenden Schwenkbewegung 27. Dies bedeutet, daß die Reinigungsfläche 16 etwa eine Auf- und Ab- bzw. Hin- und Herbewegung ausführt, bei der sich die Reinigungsfläche 16 immer auf einer Mantelfläche eines gedachten Zylinders um die Längsachse 3 bewegt.

Der Mitnehmerstift 24 bewirkt, daß die Position der Öffnung 25 des Borstenträgers 11 sich im Hinblick auf das Trägerrohr 2 im wesentlichen nicht verändert. Dies hat zur Folge, daß die oszillierende Schwenkbewegung 28 des Borstenträgers 11 nur möglich ist, wenn der Borstenträger 11 gleichzeitig eine oszillierende Drehbewegung 29 um die von dem Lagerstift 18 gebildete Querachse 14 ausführt. Dies bedeutet, daß die Reinigungsfläche 16 ebenfalls diese oszillierende Drehbewegung 29 um die Querachse 14 ausführt.

Die oszillierende Schwenkbewegung 28 und die oszillierende Drehbewegung 29 des Borstenträgers 11 und damit der Reinigungsfläche 16 überlagern sich zu einer Bewegung, bei der somit die Reinigungsfläche 16 gleichzeitig geschwenkt und gedreht wird.

Ein Benutzer, der die beschriebene elektrische Zahnbürste mit dem Bürstenteil 1 zur Zahnreinigung verwendet und hierzu - wie üblich - die Reinigungsfläche 16 des Bürstenteils 1 etwa parallel zum Mund an den Zähnen entlangführt, bewirkt durch die oszillierende Drehbewegung 29 der Reinigungsfläche 16 insbesondere eine Reinigung der freien Zahnflächen, also der bukkalen und lingualen Flächen der Zähne. Mit Hilfe der oszillierenden Schwenkbewegung 28 der Reinigungsfläche 16 erreicht der Benutzer zusätzlich insbesondere eine Reinigung der Interdentalflächen, also der nicht frei zugänglichen Zahnflächen zwischen den einzelnen Zähnen.

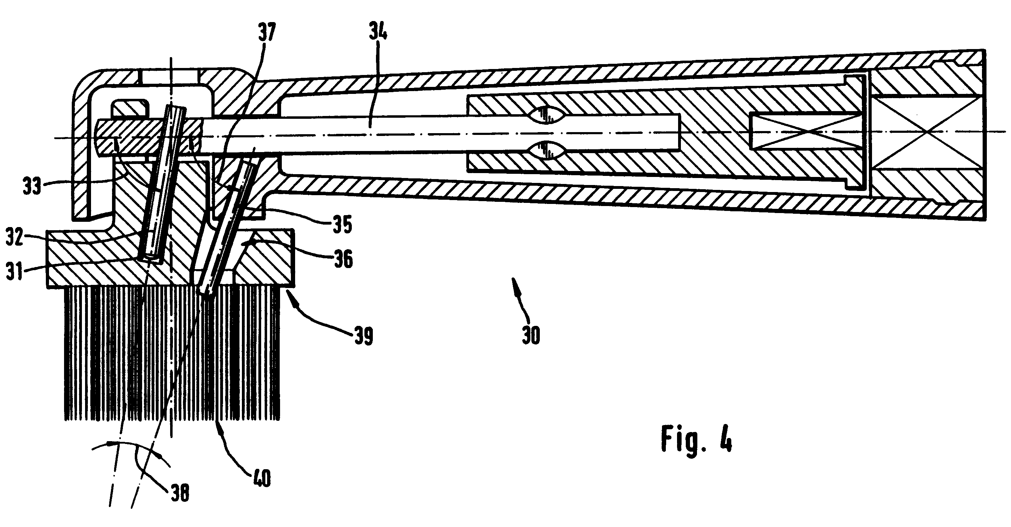

Das in der Fig. 4 dargestellte Bürstenteil 30 entspricht im wesentlichen dem in den Fign. 1 bis 3 dargestellten Bürstenteil 1 mit Ausnahme der Anordnung des Sacklochs 17, des Lagerstifts 18, des Mitnehmerstifts 24 und der Öffnung 25. Bei dem in der Fig. 4 gezeigten Bürstenteil 30 sind ein Sackloch 31 und ein Lagerstift 32 vorgesehen, die in einem Winkel 33 im Bereich von etwa 70 Grad bis etwa 110 Grad, insbesondere von etwa 80 Grad oder 100 Grad, zu einer Welle 34 angeordnet sind. Des weiteren sind bei dem Bürstenteil 30 der Fig. 4 ein Mitnehmerstift 35 und eine Öffnung 36 vorgesehen, die in einem Winkel 37 im Bereich von etwa 60 Grad bis etwa 120 Grad, insbesondere von etwa 75 Grad, zu der Welle 34 angeordnet sind. Daraus können sich weitere Bereiche des Winkels 38 zwischen dem Sackloch 31 bzw. dem Lagerstift 32 und dem Mitnehmerstift 35 bzw. der Öffnung 36 ergeben, bevorzugt werden Winkel von etwa 0 Grad bis etwa 20 Grad, insbesondere von etwa 10 Grad. Durch die geeignete Wahl der Winkel 33, 37 und 38 wird eine zusätzliche Taumelbewegung eines Borstenträgers 39 und damit einer Reinigungsfläche 40 erreicht.

## Patentansprüche

1. Bürstenteil (1) für eine elektrische Zahnbürste, mit einem Trägerrohr (2), in dem eine um eine Längsachse (3) drehbar gelagerte und oszillierend antreibbare Welle (7) untergebracht ist, und mit einem Borstenträger (11), der um eine Querachse (14) drehbar gelagert ist, dadurch gekennzeichnet, daß die oszillierende Drehbewegung (27) der Welle (7) auf den Borstenträger (11) mit einem von der Welle (7) abstehenden Lagerstift (18) übertragen wird, auf dem der Borstenträger (11) drehbar gelagert ist, und daß die Mittel, die die Drehbewegung (29) des Borstenträgers (11) um die Querachse (14) bewirken, einen von dem Trägerrohr (2) abstehenden Mitnehmerstift (24), der in eine Öffnung (25) des Borstenträgers (11) eintaucht, umfassen.

2. Bürstenteil nach Patentanspruch 1, dadurch gekennzeichnet, daß der Lagerstift (18, 32) und die Welle (7, 34) in einem Winkel (33] von etwa 70 Grad bis etwa 110 Grad, insbesondere 90 Grad, zueinander angeordnet sind.

3. Bürstenteil nach einem der vorhergehenden Patentansprüche, dadurch gekennzeichnet, daß der Borstenträger (11) ein Sackloch (17) zur Aufnahme des Lagerstifts (18) aufweist, und daß Mittel (19, 20, 21, 22, 23) vorgesehen sind zur Kopplung des Borstenträgers (11) und der Welle (7).

4. Bürstenteil nach einem der vorhergehenden Patentansprüche, dadurch gekennzeichnet, daß der Borstenträger (11) eine brückenartige Öffnung (23) aufweist, in die die Welle (7) hineinragt.

5. Bürstenteil nach einem der vorhergehenden Patentansprüche, dadurch gekennzeichnet, daß der Mitnehmerstift (24, 35) und die Welle (7, 34) in einem Winkel (37) von etwa 60 Grad bis etwa 120 Grad zueinander angeordnet sind.

6. Bürstenteil nach einem der vorhergehenden Patentansprüche, dadurch gekennzeichnet, daß die Öffnung (25) als Langloch ausgestaltet und/oder mit einer Buchse (26) aus Metall, Keramik, Gummi oder dergleichen versehen ist.

7. Bürstenteil nach einem der vorhergehenden Patentansprüche, dadurch gekennzeichnet, daß der Lagerstift (18, 32) und der Mitnehmerstift (24, 35) in einem Winkel (38) von etwa 0 Grad bis etwa 20 Grad zueinander angeordnet sind.

8. Elektrische Zahnbürste mit einem ankuppelbaren, insbesondere aufsteckbaren Bürstenteil (1, 30) nach einem der vorhergehenden Patentansprüche.

## Claims

1. A brush section (1) for an electric toothbrush, with a mounting tube (2) in which a shaft (7) is received which is mounted so as to be rotary about a longitudinal axis (3) and is adapted to be driven in an oscillatory fashion, and with a bristle supporting structure (11) mounted for rotation about a transverse axis (14), **characterized in that** the oscillatory rotational motion (27) of the shaft (7) is transmitted to the bristle supporting structure (11) by means of a bearing pin (18) projecting from the shaft (7) and carrying the bristle supporting structure (11) for rotary movement thereon, and that the means effecting the rotary motion (29) of the bristle supporting structure (11) about the transverse axis (14) comprise a drive pin (24) projecting outwardly from the mounting tube (2) and extending into an opening (25) in the bristle supporting structure (11).

2. The brush section as claimed in patent claim 1, **characterized in that** the bearing pin (18, 32) and the shaft (7, 34) are arranged at a relative angle (33) of about 70 degrees to about 110 degrees, in particular of 90 degrees.

3. The brush section as claimed in any one of the preceding patent claims, **characterized in that** the bristle supporting structure (11) includes a blind-end bore (17) for receiving therein the bearing pin (18), and that means (19, 20, 21, 22, 23) are provided for coupling the bristle supporting structure (11) with the shaft (7).

4. The brush section as claimed in any one of the preceding patent claims, **characterized in that** the bristle supporting structure (11) includes a bridge-type opening (23) into which the shaft (7) extends.

5. The brush section as claimed in any one of the preceding patent claims, **characterized in that** the drive pin (24, 35) and the shaft (7, 34) are arranged at a relative angle (37) of about 60 degrees to about 120 degrees.

6. The brush section as claimed in any one of the preceding patent claims, **characterized in that** the opening (25) is an elongated hole and/or is provided with a bushing (26) made of metal, ceramics, rubber or the like.

7. The brush section as claimed in any one of the preceding patent claims, **characterized in that** the bearing pin (18, 32) and the drive pin (24, 35) are arranged at a relative angle (38) of about 0 degrees to about 20 degrees.

8. An electric toothbrush with a brush section (1, 30) adapted to be coupled, in particular push-fitted thereto, according to any one of the preceding patent claims.

## Revendications

1. Elément de brossage (1) pour une brosse à dents électrique, comportant un tube porteur (2) dans lequel est logé un arbre (7) qui est monté de façon à pouvoir tourner autour d'un axe longitudinal (3) et qui peut être entraîné de façon oscillante, et comportant un support de poils (11) qui est monté de façon à pouvoir tourner autour d'un axe transversal (14), caractérisé en ce que le mouvement de rotation oscillante (27) de l'arbre (7) est transmis au support de poils (11) par une broche de palier (18) qui fait saillie de l'arbre (7) et sur laquelle le support de poils (11) est monté de façon à pouvoir tourner, et en ce que les moyens qui provoquent le mouvement de rotation (29) du support de poils (11) autour de l'axe transversal (14) comprennent une broche d'entraînement (24) qui fait saillie du tube porteur (2) et qui s'enfonce dans une ouverture (25) du support de poils (11).

2. Elément de brossage suivant la revendication 1, caractérisé en ce que la broche de palier (18, 32) et l'arbre (7, 34) sont agencés l'un par rapport à l'autre selon un angle (33) d'approximativement 70 degrés à approximativement 110 degrés, en particulier de 90 degrés.

3. Elément de brossage suivant l'une des revendications précédentes, caractérisé en ce que le support de poils (11) présente un trou borgne (17) pour recevoir la broche de palier (18), et en ce que des moyens (19, 20, 21, 22, 23) sont prévus pour le couplage du support de poils (11) et de l'arbre (7).

4. Elément de brossage suivant l'une des revendications précédentes, caractérisé en ce que le support de poils (11) présente une ouverture (23) en genre de pont dans laquelle pénètre l'arbre (7).

5. Elément de brossage suivant l'une des revendications précédentes, caractérisé en ce que la broche d'entraînement (24, 35) et l'arbre (7, 34) sont agencés selon un angle (37) d'approximativement 60 degrés à approximativement 120 degrés l'un par rapport à l'autre.

6. Elément de brossage suivant l'une des revendications précédentes, caractérisé en ce que l'ouverture (25) est façonnée sous la forme d'un trou oblong et/ou est munie d'une douille (26) en métal, en céramique, en caoutchouc, etc..

7. Elément de brossage suivant l'une des revendications précédentes, caractérisé en ce que la broche de palier (18, 32) et la broche d'entraînement (24, 35) sont agencées selon un angle (38) d'approximativement 0 degré à approximativement 20 degrés l'une par rapport à l'autre.

8. Brosse à dents électrique comportant un élément de brossage (1, 30) qui peut être accouplé, en particulier emboîté, suivant l'une des revendications précédentes.
